# EUROPEAN PATENT APPLICATION

(11) **EP 4 485 362 A2**
(43) Date of publication of application: **01.01.2025**
(21) Application number: 24185309.2
(22) Date of filing: 28.06.2024
(51) Int. Cl.: G06T 9/00, H04N 19/172, H04N 19/182, H04N 19/186, H04N 19/436, H04N 19/503

(54) **NEURAL CODING AND DECODING METHOD AND APPARATUS**

(30) Priority: 30.06.2023 GB 202309991
(71) Applicant: Sony Interactive Entertainment Deutschland GmbH, 63263 Neu-Isenburg (DE); Sony Interactive Entertainment Europe Limited, London W1F 7LP (GB)
(72) Inventor: CONDE, Marcos, London, W1F 7LP (GB); BIGOS, Andrew, London, W1F 7LP (GB)
(74) Representative: D Young & Co LLP

(57) **Abstract**

A method of image coding comprises the steps of, for a respective image, training a respective neural network to output pixel data for that image and outputting the trained neural network as the encoded representation of the image; meanwhile a method of image decoding comprises the steps of receiving a respective neural network trained to output pixel data for one image and prompting the neural network to output the pixel data for that image.

## Description

### BACKGROUND OF THE INVENTION

### Field of the invention

The present invention relates to neural coding and decoding methods and apparatuses.

### Description of the Prior Art

The "background" description provided herein is for the purpose of generally presenting the context of the disclosure. Work of the presently named inventors, to the extent it is described in this background section, as well as aspects of the description which may not otherwise qualify as prior art at the time of filing, are neither expressly or impliedly admitted as prior art against the present invention.

Conventional video encoders and decoders use one or more for a variety of methods for removing redundant image elements from the source image, for example by quantisation (to intelligently reduce the number of values to transmit), by the removal of high frequency components (which may have limited visual impact), and by the removal of spatially and/or temporary redundant components (for example repeating blocks of values within an image, or corresponding values between successive images, optionally after taking account of inter-image movement). These approaches can be seen in various well-known encoding techniques such as gif, JPEG, and MPEG images and videos.

However, there is an ongoing desire to provide more efficient image and video encoding techniques, and the present application seeks to address or alleviate this desire.

### SUMMARY OF THE INVENTION

In a first instance, a method of image coding is provided in accordance with claim 1.

In a first instance, a method of style coding is provided in accordance with claim 8.

In another instance, a method of image decoding is provided in accordance with claim 9.

In another instance, a method of style decoding is provided in accordance with claim 10.

In another instance, an image encoder is provided in accordance with claim 12.

In another instance, a non-transitory machine-readable medium comprising a representation of one or more images is provided in accordance with claim 13.

In another instance an image decoder is provided in accordance with claim 14.

It is to be understood that both the foregoing general description of the invention and the following detailed description are exemplary, but are not restrictive, of the invention.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an entertainment device configurable as an encoder and/or decoder in accordance with embodiments of the present description.
- Figure 2 is a schematic diagram of a neural network in accordance with embodiments of the present description.
- Figure 3 is a schematic diagram of a neural network in accordance with embodiments of the present description.
- Figure 4 is a flow diagram of a method of image coding in accordance with embodiments of the present description.
- Figure 5 is a flow diagram of a method of image decoding accordance with embodiments of the present description.

### DESCRIPTION OF THE EMBODIMENTS

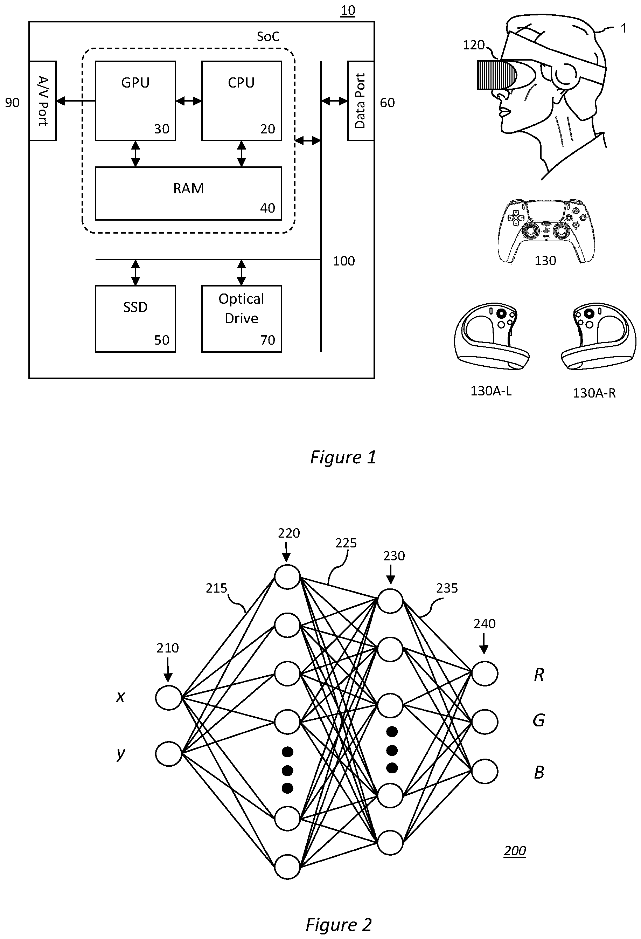

Referring now to the drawings, wherein like reference numerals designate identical or corresponding parts throughout the several views, in Figure 1 an example of an entertainment system 10 is a computer or console such as the Sony^{®} PlayStation 5^{®} (PS5).

The entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet^{®} port, Wi-Fi^{®} port, Bluetooth^{®} port or similar, as appropriate. It may also optionally receive data via an optical drive 70.

Audio/visual outputs from the entertainment device are typically provided through one or more A/V ports 90, or through one or more of the wired or wireless data ports 60.

An example of a device for displaying images output by the entertainment system is a head mounted display 'HMD' 120, such as the PlayStation VR 2 'PSVR2', worn by a user 1.

Where components are not integrated, they may be connected as appropriate either by a dedicated data link or via a bus 100.

Interaction with the system is typically provided using one or more handheld controllers (130, 130A), such as the DualSense^{®} controller (130) in the case of the PS5, and/or one or more VR controllers (130A-L,R) in the case of the HMD.

### Encoder

In embodiments of the present description, entertainment system 10 is an example of a coding system operable to implement the methods and techniques described herein. The coding system may be used to encode and/or decode images and/or videos according to the methods and techniques described herein.

In an embodiment of the present description, an encoding method comprises training a machine learning system such as a neural network.

An example neural network would be a fully connected multi-layer perceptron, i.e. a fully connected multi-layer network having one or more hidden layers. Typically such a neural network operates as a feedforward neural network, trained using a backpropagation algorithm to approximate target outputs in response to corresponding inputs. More generally the neural network can be implemented as a fully connected neural network, a deep neural network (DNN), multilayer perceptron (MLP), feedforward artificial neural network (ANN), or a convolutional neural network (CNN, or ConvNet).

In particular, in embodiments of the present description, each image/frame is encoded as one neural network. That is to say that respective neural networks are trained to generate the pixel data corresponding to one image. The neural network is then an implicit neural representation of the source content of that image / frame.

It is then a sequence of respective neural networks that is stored, transmitted, or streamed instead of the image/frame data or a conventionally encoded version thereof.

This approach has the scope to be highly efficient as the neural network can learn how best to represent the given image within the weights that comprise it, the weights effectively then being the compressed representation of the image. The image bandwidth can then be controlled by the number of nodes within the neural networks used to encode the images, which in turn determines the number of weights available to the neural network.

Hence the degree of compression is controlled by the number of nodes (typically hidden nodes) within the neural networks used to represent respective images, and each neural network learns the best representation of the image for the available bandwidth provided by the weights of the network.

Turning now to figure 2, an example neural network 200 comprises an input node layer 210, an output node layer 240 and one or more hidden layers 220, 230. The hidden layers may comprise any suitable number of nodes. Between each layer are typically a fully connected set of weights 215, 225, 235; that is to say there is a weight between each node in adjoining layers. However, optionally the network does not need to be fully connected in this manner, and so some weights may not be included.

In embodiments of the present description, two input nodes (x, y) indicate a pixel position within the image to be encoded, and three output nodes (R, G, B) indicate the colour values for the pixel at the x, y pixel position. It will be appreciated that RGB is an example colour scheme and any suitable colour (or greyscale) representation can be used, such as for example YUV or HSV.

The neural network is trained on a particular image (e.g. image or image frame of a video) using the RGB values of that image at the different x, y positions. The training can continue until an error criterion is met.

The error criterion may comprise some or all of the following:
i. The total error for all the image pixels is below a threshold amount (indicating that the image accuracy meets a predefined quality/accuracy level).
   - alternatively the total error for a subset of the pixels is below a separate threshold amount (simply indicating that a representative sample of the pixels meet a predefined quality/accuracy level).
ii. The average error for all or a subset of the pixels is below a threshold amount (there will be appreciated that the average is a similar measure to the total for the purposes of meeting a predefined quality/accuracy level).
iii. The error for no more than N image pixels is above a threshold amount (where N indicates a maximum for an acceptable number of pixels in the image that have a significant error - optionally such pixels could be subsequently corrected at the decoder using error masking techniques).
iv. The total or average error has not changed by a threshold amount after M training iterations (i.e. the neural network has likely achieved its best available outcome for the current training process, or that subsequent training iterations will represent a sufficiently small return on computational investment that they should not be continued.

Once trained, the neural network comprises an internal representation of the image within its weights.

Assuming that the architecture/layout of the neural network is known and the decoder, then just the weight values for the neural network can be transmitted to the decoder in a predetermined order.

Optionally during training, the weight values can be constrained to values that are suitable for transmission. For example typically weights lie within the range 0 to 1; however, the system may be forced during training to use weight values being fractions of 256 or 65536 (e.g. by selecting the fraction closest to the calculated change of weight); the weights could then be represented exactly using one or two bytes each. To the other bitwise plantations of values may be considered, or the P most common values within the network (or between respective layers) could be chosen using one or more quantisation schemes.

The above approaches are intended to enable the network to perform correctly / as expected using weight values that can be efficiently transmitted to the decoder.

With such an approach, modifications to the training scheme can also be considered; for example the network could first be trained conventionally, and then the weight values could be constrained to fractions such as those above or to values corresponding to a quantisation scheme, and then only a subset of the network (for example within one layer) may be given top-up training to compensate for the small changes in weight values imposed throughout the network by this approach; optionally this layer may be transmitted with a different fidelity of values. Or for example most of the layers may be trained using fractions of 256, with one layer (for example the final set of weights leading to the output nodes) being trained using fractions of 65535.

In any event, the weights of the neural network may then be transmitted from the encoder (or a server or other transmitter with access to stored results of the encoder) to the decoder, for example as a stream of data or as a file, or exported as part of a software product such as an optical disc.

### Decoder

The decoder then queries the received neural network for each x, y pixel position and stores the output pixel information for that position.

It will be appreciated that for a typical HD image (1920x1080) this would represent over 2 million queries, whilst for a UHD image (3840x2160) this represent over 8 million queries.

Accordingly in embodiments of the present disclosure, the decoder comprises a graphics processing unit with a plurality of parallel shaders, each operable to query a respective copy of the neural network to generate results in parallel and thus speed up the decoding process.

As such the decoder does not decode the image in a conventional manner, but prompts one or more copies of the neural network to generate the image information at respective pixel positions.

### Variants

### I and P Networks

The above approach provides a means for an image or image sequence such as a video to be encoded by creating respective trained neural networks for each image that output pixel information corresponding to the image for each queried pixel position.

This requires the neural network to build a substantially complete internal representation of the image. As such, the neural network can be thought of as an 'I-frame' neural network; that is to say, a neural network that completely encapsulates the image it represents. This neural network is able to do so extremely efficiently, but over a sequence of images there is scope to improve this further.

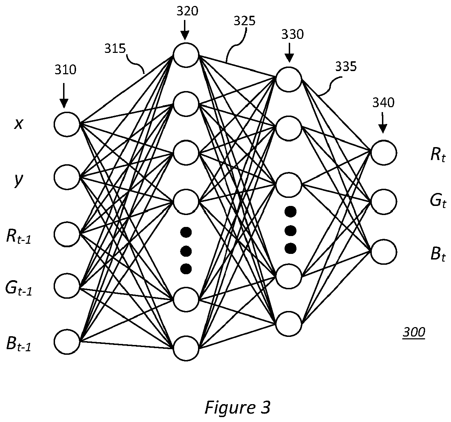

Referring now to figure 3, this illustrates a variant neural network 300 comprising input layer 310, output layer 340, and one or more hidden layers 320, 330 in a similar manner to that of figure 2. However in this case there are three additional inputs Rₜ₋₁, G ₜ₋₁, Bₜ₋₁ that corresponds to the RGB values for the x, y position in the previous image of an image sequence. More specifically the additional inputs correspond to the RGB values for the x, y position in the image generated by the previous neural network, since this is what the decoder will have access to when prompting the subsequent neural network to generate outputs.

This variant neural network is then trained to output the pixel values Rₜ, Gₜ, Bₜ for the current image based upon the pixel position and the pixel values at that position in the previous image.

This exploits the assumption that the previous image in an image sequence is typically very similar to the current image. As a result in this case the neural network only has to learn how to modify inputs from the previously decoded/output image to generate the new image, without storing a complete internal representation of the image itself. Consequently typically the neural network can achieve similar quality results with far fewer weights, meaning that the overall size of the neural network can be smaller and consequently the bandwidth required to transmit or store the neural network is also smaller.

Such a neural network can be thought of as a P-frame neural network; that is to say a neural network that relies upon proceeding image data to generate its output.

Optionally the three additional inputs can be RGB values for a different pixel position in the previous image to the pixel position represented by the input x, y coordinates for the current image being encoded. In particular, the input RGB values may take account of inter-frame motion and represent the RGB values at a position in the proceeding image where the corresponding image element was at that time, so that it is a good match for the current RGB values at the x, y coordinates. The inter-frame motion may be limited to whole-image panning, or more complex motion within the image, for example represented by motion vectors.

In order to also input the same RGB values at the decoder, the decoder must either independently estimate the same inter-frame motion, or the inter-frame motion information is provided as separate data in association with the neural network when it is transmitted. Alternatively the neural network can also be trained to output such information as well by providing it as target data during training.

A sequence of trained neural networks may therefore comprise a mixture of I-frame and P-frame neural networks, typically using I frames when there is a scene change, or where the difference between subsequent images is too large for a p-frame neural network to generate the output to an acceptable error level. The p frames may optionally also be accompanied with information indicating inter-frame motion, or enabling its calculation at the decoder, where this has been used during training.

It may also be possible to improve the efficiency of the I-frame neural networks by providing them with Rₜ₋₁, Gₜ₋₁, Bₜ₋₁ inputs, but using a selected standard image. For example, a standardised preceding image may be one of Q images that are each averages of images of a particular type; for example a landscape image, a cityscape image, a talking heads image and the like; these will be non-descript in detail, but will include typical features such as a light upper half of the image with a certain colour range and darker lower half with a different certain colour range for the landscape image, a different division of light and colour for a cityscape image, a general human outline and generic background for a talking head image, and so forth. In this case, Q may be for example 8, 16, 32, etc.

The I-frame neural network then has to learn how to modify this general image to the specific image it is being trained upon; because the standardised generic precursor image is only a poor approximation of the current image, this neural network would typically require more weights than a normal P-frame neural network, but because it is only calculating the differences it is likely to require fewer weights than a pure I frame network that doesn't have inputs from a generic precursor image, and so will encode the image more efficiently.

Consequently, during training the standardised preceding image within the set of Q images that is closest to the image being encoded (for example in terms of a sound squared error in pixel values) is chosen and used to provide the Rₜ₋₁, G ₜ₋₁, B ₜ₋₁ inputs during training, and the chosen image is indicated for example as meta data along with the trained network when transmitted to the decoder. The decoder can then select the correct standardised preceding image when prompting output from the trained network.

It will also be appreciated that the Q standard images may be generated from the specific content being encoded so that the colour and lighting within the standard images is a better initial match than if completely generic images were used; these Q standard images may then be encoded using I frame neural networks or any other conventional technique, and transmitted for example at the start of the stream or any event before they are needed.

In this way, for at least the majority of the encoded stream, the inputs and outputs of the respective neural networks - and potentially their footprints (number of weights) can be the same, making the decoding process simpler in terms of consistently placing and running the neural networks on a GPU.

### Blockwise inputs and/or outputs

It will be appreciated that it would not be efficient for the neural network to have output nodes for every pixel of the decoded image, as this would mean that internally there are multiple weights for every pixel, and it would be highly likely that the neural network would in fact be much larger than the original image, with many of the weights contributing to individual pixels being highly redundant.

However, outputting RGB (or other colour scheme) pixel values for a single pixel represents the opposite extreme; it provides efficient use of weights, particularly for those connecting to the output layer, but as a result may cause these rates to be very sensitive to changes in value or limitations in value selection (such as those discussed previously to more efficiently transmit the weight values), and also forces the decoder to implement a large number of queries to generate the overall image.

Accordingly, optionally the neural network may be configured out provide pixel values for a larger subset of the image. For example, the neural network may output pixel values for a 2 x 2, 4 x 4, 8 x 8, 16 x 16, 32 x 32, or 64 x 64 pixel block (e.g. a macroblock or equivalent). As such the output layer (240, 340) may comprise many more nodes than shown in figures 2 or 3. It is also likely that the hidden layer (or the hidden layer next to the output layer 230, 330) comprises fewer nodes, so that the number of weights (235, 335) between this hidden layer and the output layer are roughly similar to that for the single pixel output version.

Similarly, and optionally independently of the choice of single or multiple output pixels, the neural network may be configured to have more input values than for example just the RGB values of a single pixel at the x, y position. For example the neural network may have input pixel values for a 2 x 2, 3 x 3, 4 x 4, 5 x 5, 8 x 8, 16 x 16, 32 x 32, or 64 x 64 pixel block. Again the hidden layer (220, 320) adjacent to the input layer (210, 310) may comprise fewer notes that the overall number of intervening weights (215, 315) is roughly similar to the single input version.

Optionally, the input RGB values may correspond to a lower resolution version of the target image; hence for example a 2 x 2 or 4 x 4 set of RGB values may represent a down-sampled 4 x 4, 8 x 8 or 16 x 16 pixel region of the preceding image.

Where the input region of the preceding image is larger than the output region of the respective image, then the input region provides some context to the neural network when generating the output region values, which may assist in particular with some styles (as described elsewhere herein), but some of this may be redundant and reduce overall efficiency in the network whilst potentially improving image quality. Meanwhile where the input region is the same size as the output region (whether using a down sampled version of the input region or pixel by pixel values for the input region), then the network is operating in a similar manner to that described previously, but for multiple pixels within a block.

It will also be appreciated that in a neural network that helps pixel data in a block-wise fashion, the x, y inputs may correspond to block positions rather than pixel positions.

### Stereoscopy

A neural network may also be trained to output two sets of RGB values for corresponding coordinates in a stereo image pair. In this case (or more generally, where applicable whether for stereoscopic imagery or not) the neural network may also receive depth information (e.g. from the corresponding depth map) or disparity information to assist with an internal representation of the stereoscopic scene. In this case, it is likely that the two sets of RGB values will be different because the same position in each image is likely to comprise different elements due to the disparity/offset of the stereoscopic image.

Hence alternatively the neural network may be trained to output two sets of RGB values and a disparity/offset value, the first set of RGB values corresponding to the input coordinates for one of the image pair (as an arbiter example, the left), and the second set corresponding to a position offset from the input coordinates according to the stereoscopic disparity the image for the other of the image pair (in this case the right). In this way the neural network can learn to output the same element of the scene as offset due to stereoscopy, and so the RGB values are likely to be very similar.

These two approaches represent different internal representational overheads for the processes of predicting the colour or position of the stereoscopic image elements, and the different approaches may respectively be more efficient for different types of content, or within a particular piece of content.

### Multiple styles

Different users may wish to view the content in different ways. Doing so may be for purely aesthetic reasons, or it may be beneficial for particular kinds of user. For example it may be advantageous to provide the content in a format for the best viewing by colour-blind users (e.g. for various degrees of red-green colour blindness, or similarly for various degrees of blue-yellow colour blindness).

Aesthetic changes may include differences in contrast and/or colour balance, or other effects such as creating a paint, pastel, or line drawing version of the image or some other texture modification, a high saturation version, a warm or cool colour temperature version, or the like.

Conventionally, such modifications are applied by a client device after the source image is decoded. However in embodiments of the present description, optionally rather than apply the style at the decoder, the style may be incorporated into the neural network.

Optionally, where the style may be assumed to persist for a significant portion of the viewing period (for example in relation to a colour blind user, or where a user is choosing a particular colour temperature version in response to settings on the television or a property of their local environment), then a neural network (in whichever form has previously been described herein) may be trained specifically to output pixel values in that style, and the relevant sequence of neural networks may be streamed.

However, for example in a broadcast scenario where a single stream may be received by multiple viewers, it may not be practical to output an individually tailored stream due to the different needs of the viewers.

In this case, optionally a neural network (in whichever form has previously been described herein, e.g. completely encapsulating the encoded image, modifying a standardised image, or modifying a preceding image, whether to output for a single pixel at a time or for multiple pixels at a time), may also have one or more style inputs.

The style input may take the form of binary inputs or a series of flags (for example as a one-hot vector) to respective additional input nodes of the network. The binary or one-hot flag pattern indicates the choice of style. Typically one style is neutral, i.e. represents the original image. Alternatively or in addition the style can be represented by a vector, a scalar, or indeed text (for example converting the text into a vector, optionally as an abstraction of the text).

The neural network is then trained on multiple versions of the image (i.e. at least two), one for each supported style. Hence in this case the neural network may output different RGB values for the same pixel position depending on the indicated style. In this case for a comparable image quality/accuracy the neural network will be slightly larger than a neural network encoding a single style or no style at all (i.e. the 'neutral' style). Such a neural network can be thought of as similar to a combination of an I or P-frame network and a further P-frame network for each supported style, the weights driven by the style inputs interacting with the other weights to modify the image generated by the rest the network responsive to the input coordinates and optionally input RGB values.

This multiple style version of the neural network may then be transmitted to the decoder in a similar manner to that described elsewhere herein, and prompted by the decoder to output pixel values in a similar manner, but in this case the relevant style chosen by the user (for example via a Ul) can also be input to the network by the decoder so that RGB values appropriate that style are then output.

Hence in this approach, the style is not applied to the decoded image at the client device; rather multiple styles are embodied within the neural network representation of the image (or image modification), and the neural network is prompted by the decoder to output the relevant style-type.

### Style parameterisation

Where a neural network is trained on one or more styles as described previously herein, optionally one or more of the styles may also comprise one or more parameter inputs to control one or more aspects of the style.

For example, a style that modifies the colour temperature of the image may comprise a time of day parameter so that the colour temperature gradually changes from cooler to warmer towards the late evening, which can assists users with their sleep. In this case, the neural network may be trained on different colour temperatures in association with different time of day parameters.

Alternatively, the neural network may be trained on warm and cool versions of the image as separate styles, and the parameter may be a value representing a relative bias between the two styles. In this case therefore for example the style inputs for styles that together represent a potential range or spectrum of outputs may each be a continuous value rather than a flag, with the respective values indicating their Internet contribution to the output.

In a similar manner, potentially any style may comprise a parameter input, or a continuous style input, that indicates the degree/strength of stylisation with respect to a neutral version of the image. In this case again the neural network will be trained accordingly with different parameter input values and different degrees of strength/stylisation in the target output.

This also allows for different styles to be combined, by providing style inputs indicating the degree/strength with which each style is to be applied. For example, a pencil sketch style may be applied and separately a sepia colour palette style to create a combined effect that was not, in itself, part of the training set of target images.

### Style postprocessing

Optionally, given that the output of a neural network according to techniques herein is an RGB value (or similar pixel value) for a given input coordinate then optionally a stream according to embodiments of the present description can comprise a neural network with no style / neutral style output, and a separate second neural network that applies one or more styles to the output of the first neural network.

This second neural network can be trained in a similar manner style based neural networks described previously herein, acting like P-frame network that receives RGB values from the first neural network and at least a first style value and typically the coordinate values, and outputs the corresponding RGB values for the selected style.

In this case, the first network can be treated as a baseline common transmission to clients, whilst the second neural network can be treated as an enhancement layer supplied to clients who request modifications to the image (i.e. a different style).

### Other post-processing

It will be appreciated that, whether or not a style is generated by or applied to the output of the first neural network, optionally other more conventional post-processing may be performed on the resulting image.

Such post-processing may include error masking, upscaling, jitter reduction, and the like.

### Summary

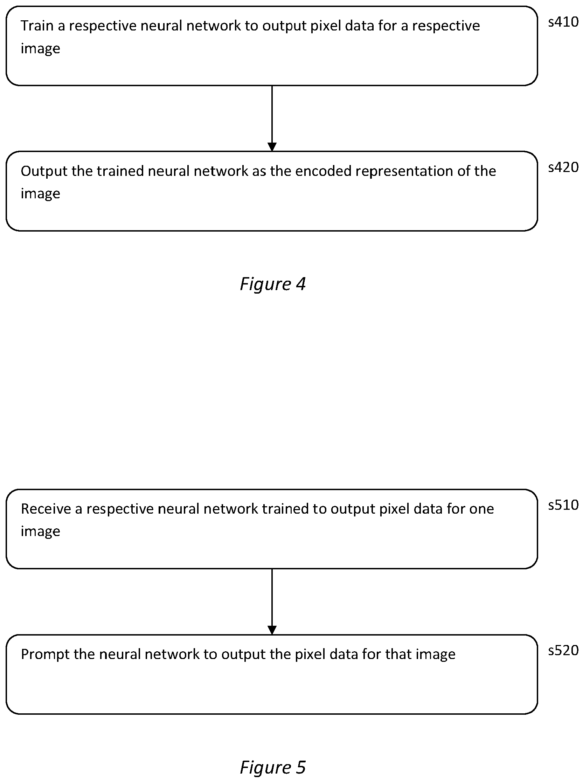

Referring now to Figure 4, in a summary embodiment of the present description, a method of image coding (for example for still or video images) comprises the following steps.

In a first step S410, for a respective image, training a respective neural network to output pixel data for that image, as described elsewhere herein.

In a second step S420, outputting the trained neural network as the encoded representation of the image (whether as a single image, or as a stream, broadcast, and/or file of successive images such as in a video), as described elsewhere herein.

It will be apparent to a person skilled in the art that variations in the above method corresponding to operation of the various embodiments of the apparatus as described and claimed herein are considered within the scope of the present invention, including but not limited to that:
- a respective neural network may comprise inputs to receive coordinates for a position in the respective image, and outputs providing colour values for a pixel at those coordinates, as described elsewhere herein;
   - in this instance, a respective neural network may further comprise inputs to receive colour values for a pixel of a prompting image for those received coordinates, as described elsewhere herein;
      - in this instance in turn, optionally the prompting image may be one selected from the list consisting of an image immediately preceding the respective image, and an image selected from a set of generic images as the image most similar to the respective image, as described elsewhere herein;
      - similarly in this instance in turn, alternatively or in addition optionally the received colour values for a pixel of a prompting image may be for a pixel offset from the received coordinates by an amount responsive to inter-image motion between the respective and prompting images, as described elsewhere herein;
   - in this instance a respective neural network may comprise inputs to receive coordinates for a position in the respective image, and outputs providing colour values for a group of pixels at those coordinates, the group being smaller than the whole respective image, as described elsewhere herein;
   - in this instance a respective neural network may comprise inputs to receive coordinates for a position in the respective image, and outputs providing colour values for a pixel in each of a stereoscopic pair of images, as described elsewhere herein;
- a respective neural network may further comprise inputs defining two or more styles, at least one of which modifies the output pixel data for the respective image, as described elsewhere herein;
   - in this instance, optionally respective styles modify the output pixel data to change one or more selected from the list consisting of a colour property relating to the type of display the respective image is displayed upon (for example to account for difference in colour balance or luminosity between displays or types of display such as TV versus head mounted display), a colour property responsive to the time of day (for example reducing the colour temperature later in the evening to help viewers sleep), a colour property responsive to a medical condition of the viewer (for example to assist users with colour-blindness or who would benefit from high contrast imagery), an aesthetic colour property (for example sepia or a high saturation 1950s style film effect), and a texture property (for example to make the image look painted or drawn, or have a grainy filmic quality, or have a rastered-by-cathode-ray-tube style), as described elsewhere herein;
   - Similarly in this instance, alternatively or in addition optionally the respective neural network may comprise inputs for one or more styles that indicate a degree or strength to which the style should be applied to the output pixel data (for example either alone or in combination with one or more other styles supported by the neural network), as described elsewhere herein; and
- as an alternative to incorporating style into a single neural network for an image, then for the respective image, training a further neural network to output style-modified pixel data for that image, the input to the further neural network comprising the output pixel data of the respective neural network, and outputting the trained further neural network as a supplemental encoded representation of the image , as described elsewhere herein.

Separately, it will be appreciated that whilst the above relates to encoding an image in a respective neural network, optionally with two or more additional styles (where one style may be 'original'), or optionally providing a second neural network to apply the two or more additional styles, optionally just the styles may be encoded, independent of the method of image encoding or decoding.

Accordingly in an embodiment of the present description, a method of style coding comprises the steps of providing a respective trained neural network comprising inputs to receive colour values and to define two or more styles for a respective image, and outputs providing colour values, the neural network having been trained to output colour for the respective image in the two or more styles, at least one of which modifies the output colour for the respective input colour values; and outputting the trained neural network to a decoder to use with a decoded image. Optionally, the respective neural network comprises inputs to receive coordinates for a position in the respective image, and the outputs have been trained to provide colour values for a pixel at those coordinates.

In this way, a style network can be transmitted that can apply a style to an existing image (e.g. an image decoded from another network, as described elsewhere herein, or an image decoded using any other technique).

At the decoder, the indicated style can be applied universally to the image, or optionally responsive to the current pixel position. Accordingly, in an embodiment of the present description a method of style decoding comprises the steps of receiving a respective neural network trained to output colour values in response to input colour values and input style values defining two or more styles, at least one of which modifies the output colour for the respective input colour values; inputting colour values of a respective image and at least a first style value to the neural network, and receiving output colour values from the neural network; and displaying the respective image using the output colour values instead of the input colour values. Optionally, the respective neural network comprises inputs to receive coordinates for a position in the respective image, and the outputs have been trained to provide colour values for a pixel at those coordinates.

Referring now to figure 5, in a summary embodiment of the present description, method of image decoding comprising the following steps.

In a first step s510, receiving a respective neural network trained to output pixel data for one image, as described elsewhere herein; and

in a second step s520, prompting the neural network to output the pixel data for that image, as described elsewhere herein.

It will be apparent to a person skilled in the art that variations in the above method corresponding to operation of the various embodiments of the apparatus as described and claimed herein are considered within the scope of the present invention, including but not limited to that:
- the respective neural network comprises inputs to receive coordinates for a position in the respective image, and outputs providing colour values for a pixel at those coordinates, and prompting the neural network to output the pixel data for an image comprises inputting coordinates for all the positions in the respective image and collating the outputs, as described elsewhere herein.

Modifications to the decoder corresponding to the modifications described elsewhere herein will be apparent to the skilled person; for example modifications to generate outputs on a pixel by pixel basis or a group of pixels basis, modifications to use colour values from a prompt image, which may be from the proceeding generated image or a best matching generic image, modifications to output pixels from respective images of a stereoscopic pair, modifications to input a style selection or selections, or a parametric value associated with one or more style selections, and modifications involving receiving a first neural network encoding the image and second neural network encoding style variations in order to generate a style modified version of the image, and modifications involving implementing these processes in parallel on the GPU or equivalent processor with parallel processing capability so that the prompting of respective instances of the neural network to generate individual pixels or group of pixels as outputs can be conducted in parallel to speed up the overall generation of the image.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, in a summary embodiment of the present description, an image encoder - for example a server (not shown) or entertainment device 10 such as a Sony PlayStation 5^{®}, may comprise the following:
Firstly, a training processor (for example GPU 30 optionally in conjunction with the CPU 20) configured (for example by suitable software instruction), to train for a respective image a respective neural network to output pixel data for that image, as described elsewhere herein.
Secondly, an output processor (for example CPU 20 optionally in conjunction with the GPU 30) configured (for example by suitable software instruction) to output (for example through data port 60, SSD 50, optical drive 70, or A/V port 90) the trained neural network as the encoded representation of the image (e.g. a solo image or an image frame as part of a sequence such as a video), as described elsewhere herein.

Instances of this summary embodiment implementing the methods and techniques described herein (for example by use of suitable software instruction) are envisaged within the scope of the application.

The resulting output can be a non-transitory machine-readable medium (such as an HDD or SSD record, or an optical drive record) comprising a representation of one or more images formed by respective neural networks for the one or more images each trained to output pixel data for the respective image (e.g. a solo image or an image frame as part of a sequence such as a video), as described elsewhere herein.

This output may be distributed on the medium, or broadcast or streamed as appropriate.

Meanwhile in another summary embodiment of the present description, an image decoder-for example a server (not shown) or entertainment device 10 such as a Sony PlayStation 5^{®}, comprises the following:
Firstly, a receiver (for example CPU 20 optionally in conjunction with the GPU 30) configured (for example by suitable software instruction) to receive (through data port 60, SSD 50, optical drive 70, or A/V port 90) a respective neural network trained to output pixel data for one image, as described elsewhere herein.
Secondly, an image generation processor (for example GPU 30 optionally in conjunction with the CPU 20) configured (for example by suitable software instruction) to prompt the neural network to output the pixel data for that image, as described elsewhere herein.

Again, instances of this summary embodiment implementing the methods and techniques described herein (for example by use of suitable software instruction) are envisaged within the scope of the application, including but not limited to that:
- the image generation processor is a graphics processing unit with a plurality of parallel processing units, and is configured to prompt parallel instances of the neural network to output pixel data for that image in parallel, as described elsewhere herein.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A method of image coding, comprising the steps of:
for a respective image, training a respective neural network to output pixel data for that image; and
outputting the trained neural network as the encoded representation of the image.

2. The method according to claim 1, in which:
a respective neural network comprises inputs to receive coordinates for a position in the respective image, and outputs providing colour values for a pixel at those coordinates.

3. The method according to claim 2 in which:
a respective neural network further comprises inputs to receive colour values for a pixel of a prompting image for those received coordinates, wherein
the prompting image is one selected from the list consisting of:
i. an image immediately preceding the respective image; and
ii. an image selected from a set of generic images as the image most similar to the respective image.

4. The method according to claim 3 in which:
the received colour values for a pixel of a prompting image are for a pixel offset from the received coordinates by an amount responsive to inter-image motion between the respective and prompting images.

5. The method according to any one of claims 2 to 4 in which:
a respective neural network comprises inputs to receive coordinates for a position in the respective image, and outputs providing colour values for a group of pixels at those coordinates, the group being smaller than the whole respective image.

6. The method according to any one of claims 2 to 4 in which:
a respective neural network comprises inputs to receive coordinates for a position in the respective image, and outputs providing colour values for a pixel in each of a stereoscopic pair of images.

7. The method according to any preceding claim in which:
a respective neural network has been trained to output pixel data for the respective image in two or more styles, at least one of which modifies the output pixel data for the respective image; and
the respective neural network comprises inputs defining the two or more styles.

8. A method of style coding comprising the steps of:
providing a respective trained neural network comprising inputs to receive colour values and to define two or more styles for a respective image, and outputs providing colour values,
the neural network having been trained to output colour for the respective image in the two or more styles, at least one of which modifies the output colour for the respective input colour values; and
outputting the trained neural network to a decoder to use with a decoded image.

9. A method of image decoding, comprising the steps of:
receiving a respective neural network trained to output pixel data for one image; and
prompting the neural network to output the pixel data for that image.

10. A method of style decoding comprising the steps of:
receiving a respective neural network trained to output colour values in response to input colour values and input style values defining two or more styles, at least one of which modifies the output colour for the respective input colour values;
inputting colour values of a respective image and at least a first style value to the neural network, and receiving output colour values from the neural network; and
displaying the respective image using the output colour values instead of the input colour values.

11. A computer program comprising computer executable instructions adapted to cause a computer system to perform the method of any one of the preceding claims.

12. An image encoder, comprising:
a training processor configured, for a respective image, to train a respective neural network to output pixel data for that image; and
an output processor configured to output the trained neural network as the encoded representation of the image.

13. A non-transitory machine-readable medium comprising a representation of one or more images formed by respective neural networks for the one or more images each trained to output pixel data for the respective image.

14. An image decoder, comprising:
a receiver configured to receive a respective neural network trained to output pixel data for one image; and
an image generation processor configured to prompt the neural network to output the pixel data for that image.

15. An image decoder according to claim 14, in which
the image generation processor is a graphics processing unit with a plurality of parallel processing units, and is configured to prompt parallel instances of the neural network to output pixel data for that image in parallel.
